# EUROPEAN PATENT APPLICATION

(11) **EP 2 360 873 A1**
(43) Date of publication of application: **24.08.2011**
(21) Application number: 11152930.1
(22) Date of filing: 01.02.2011
(51) Int. Cl.: H04L 12/24, H04L 29/06

(54) **A method and device for configuring network elements**

(30) Priority: 02.02.2010 SE 1000098
(71) Applicant: PacketFront International AB, 164 28 Kista (SE)
(72) Inventor: Nyman, Fredrik, 192 74, SOLLENTUNA (SE)
(74) Representative: Holmberg, Nils Anders Patrik

(57) **Abstract**

A method for configuring a network element, the network element providing services in a network, wherein said configuring comprises changing a first configuration of the network element into a second configuration by sending configuration information only, such as commands, needed to modify configuration, the method comprising:
- providing, in a network element control- and provisioning system, a network element independent configuration user interface for setting network element configuration information, (step 201), wherein network element specific configuration information to the network element in order to modify a configuration is specified and transmitted, (step 202); and
- configuring the network element according to the configuration information set, (step 203).

## Description

### Technical field

The present invention relates to a method and device for configuring network elements.

### Background

Networks, such as broadband networks network for providing telephone, internet and TV/video services to subscribers in a number of locations are well known. Typically, a number of service providers connected to the network provide various services to the network. The network provides these services to subscribers via network elements located close to the subscribers.

Providing a service in a broadband network comprises configuring, including, but not limited to activating, functions in the network elements such as routers or switches that connect broadband subscribers or that are otherwise part of a service delivery.

Configuration can be performed by network management systems using standardized protocols such as SNMP. It can also be performed by network engineers using command line interface or web GUI present in or communicating with the network element.

Typically, handling many services for many subscribers require automated configuration of network elements in order to reduce human interaction and create scalability and reduce cost in configuration operation.

In order to perform automated configuration of network elements, a control- and provisioning system such as that described in EP-B1-1 780 941, which is hereby incorporated by reference, can be used. However, in a network with network elements from different vendors or having different configuration commands the configuration information to be deployed in order to activate, modify or deactivate a service may differ from device to device, or from version to version of the same device.

To achieve automation in such network environments, the control- and provisioning system must often be extended by software specifically adapted to handle a certain vendor's network equipment or even version of network equipment.

US 6 760 761 describes a system and method to standardize configuration of elements corresponding to network elements. However, use of software development skills to create a policies database for each type of managed device is still required. These policies are a mixture of programming language and device specific configuration statements that are needed in order to create the configuration to be deployed into the device.

An objective problem, not solved by US 6 760 781, is how to properly modify or remove configuration as subscribers cancel existing services or order new services. While a system according to US 6 760 781 can determine the full configuration of a device or the incremental configuration of a device as additional functions are activated, it does not teach how to determine which configuration to remove from a device as a service is deactivated or modified.

In W02006/025788 is described an invention that complies a syntax of the configuration commands used by a network element into a machine readable form to allow a control- and provisioning system to determine which configuration commands that are needed to change configuration A into configuration B. Based on a current configuration of a network element and a desired configuration of a network element, W02006/025788 teaches how the control- and provisioning system can determine the exact configuration statements needed to be sent to the network element to change the configuration of that element.

In a network environment consisting of network equipment from a plurality of vendors it is however rare that a complete syntax of the configuration commands used by each network element can be obtained for use by the control- and provisioning system.
Instead, existing control- and provisioning systems are often adapted by means of software development and script development involving programmatic tasks. While network engineers are knowledgeable in the ways and means to configure network elements to add, modify and delete configuration that achieve certain functionality, they are not commonly skilful in programming.

Herein, the term "configuration information" is a general term that means all such information that a network element in a network needs for properly fulfilling its functional tasks in the network. The scope of the concept "configuration information" is not meant to be limited further in the present patent application, because the invention is equally applicable both to configuration information known at the priority date of the application and to future extensions of the concept. The problem with described existing systems and methods is that configuration is an essentially device dependent operation, each device configuration requiring a device specific operator intervention, typically be a skilled operator for that particular device.

### Disclosure of the invention

It is an object of this invention to provide a method and system of configuration of network elements that is device independent and relatively easy to manage, requiring no device specific skilled person.

According to an aspect, the invention is based on a network element independent configuration user interface such as an overall network element configuration assistant that controls all services available for all types of network elements, also third party network elements.

The present invention provides a network element type independent user interface where a user such as an operator or a network engineer can provide instructions on how to add, modify and delete configuration settings for a particular network element.

The present invention, according to an embodiment, provides a method for configuring a network element, the network element providing services in a network, wherein said configuring comprises changing a first configuration of the network element into a second configuration by sending configuration information only, such as commands, needed to modify configuration, the method comprising:
- providing, in a network element control- and provisioning system, a network element independent configuration user interface for setting network element configuration information, wherein network element specific configuration information to the network element in order to modify a configuration is specified and transmitted; and
- configuring the network element according to the configuration information set.

Herein, the term "to modify" includes any or all of: to add, modify and delete.

Herein, the term "is specified" means that network element configuration information being specific for a particular network element is mapped to corresponding information of the network element independent configuration user interface. Or in other words, by means of the inventive method, the commands required, or used, to provide a particular feature for a particular network element is specified.

In this way, a device independent configuration, irrespective of third party devices, can be achieved. In particular, in this way, configuration of network elements system that is relatively easy to manage, requiring no device specific programming language is provided. This will be further explained as follows.

The present invention, according to another embodiment, provides a network element configuration device for configuring a network element in a network for providing services to subscribers, wherein the network element supports a number of subscribers for provision of the services, and wherein the network comprises a network control - and provisioning system. The network element configuration device is provided in the network control system, and arranged to control all services available for the network element, and is arranged to provide a network element independent user interface for setting network element configuration information, and configuring the network element according to the configuration information set.

According to an embodiment, the network element configuration device is embodied as a graphical interface. This is very user friendly. The graphical interface can be provided as a "configuration assistant" operating as a master tool.

According to an embodiment, the configuration device is provided for all types of network elements and versions.

According to another embodiment of the invention, there is provided a network element configuration device for configuring a network element, the network element providing services in a network, the network comprising a network control- and provisioning system, the network element configuration device being provided in the network control- and provisioning system, wherein said configuring comprises changing a first configuration of the network element into a second configuration by sending configuration information only, such as commands, needed to modify configuration; wherein the network element configuration device is arranged to provide a network element independent user interface for setting network element configuration information, wherein network element specific configuration information to the network element in order to modify a configuration can be specified and transmitted, and configuring the network element according to the configuration information set.

The invention is typically implemented purely in software, but is not limited thereto.

### Brief description of drawings

The features and advantages of the present invention will become further apparent from the following detailed description and the accompanying drawing, of which:
Figure 1 shows a generic description of a broadband network, in which the invention can be implemented,
Figure 2 shows a flow chart of the method according to an embodiment of the invention, and
Figure 3 shows a functional block schematic view of a network element configuration device according to an embodiment of the present invention.

### DESCRIPTION OF THE INVENTION

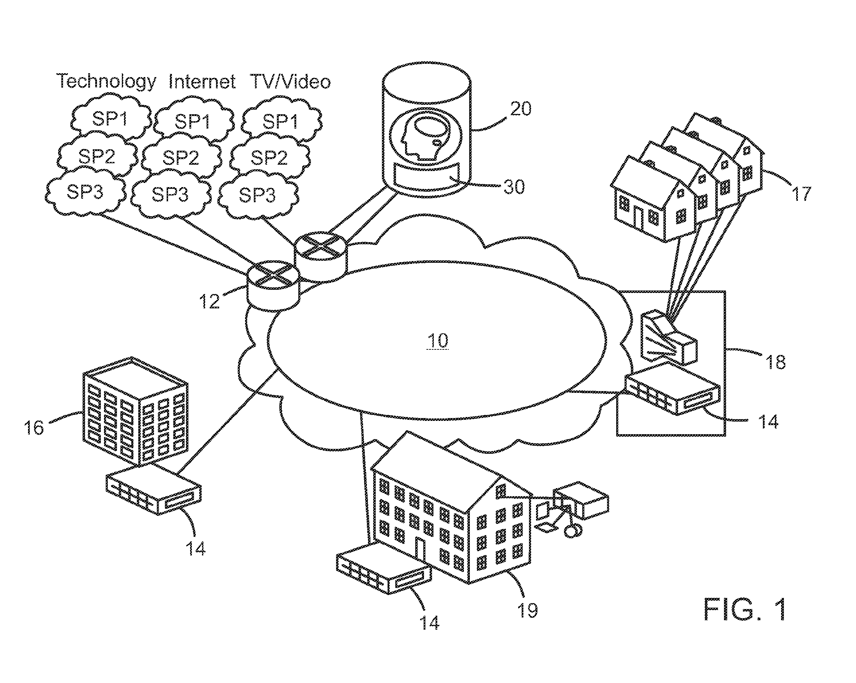

Figure 1 shows a description of a broadband network for providing telephone, internet and TV/video services to subscribers in a number of locations into which the invention can be implemented. A series of service providers SP 1, SP 2, SP3, provide the various services, such as technology, Internet and TV/video, to the network 10 via conventional access points 12. The network 10 connects these to subscribers via network elements 14, such as routers, from different suppliers, herein ASR®, Hewlett Packard® (HP) and Dlink®. The suppliers are sometimes referred to as third party suppliers. These can include business locations that can include routers in commercial property 16, and domestic subscribers with routers located in a central office 18 for a neighbourhood of separate dwellings (houses 17), or in a single building 19 such as an apartment building.

Operation of the network can be controlled by a control- and provisioning system 20, such as BECS®, manufactured and sold by PacketFront®, that configures the various elements of the network to operate in the desired manner.

Each network element 14 can be supplied from one or more supplier(s), including any third party suppliers and/or be of different versions.

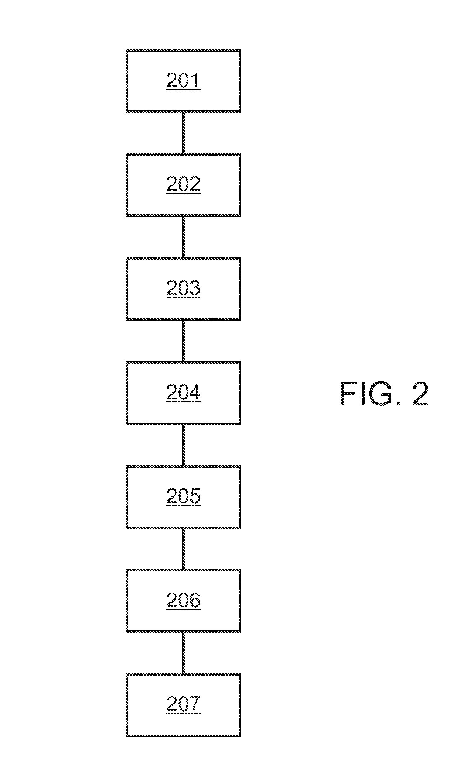

Now is referred to figure 2, which shows a flow chart of a method for configuring a network element, the network element providing services in a network, wherein said configuring comprises changing a first configuration of the network element into a second configuration by sending configuration information only, such as commands, needed to modify configuration.

The method comprises the steps of:
- providing, in a network element control- and provisioning system, a network element independent configuration user interface for setting network element configuration information, step 201, wherein network element specific configuration information to the network element in order to modify a configuration is specified and transmitted, step 202; and
- configuring the network element according to the configuration information set, step 203.

The configuration user interface is arranged to be able to determine the current setting of a configuration command by a query to the network element. The query typically consists of obtaining the network elements complete running or stored configuration file. The query typically consists of using at least one of the network element's command line interface diagnostic commands and capture from its output the current setting of the configuration command.

According to an embodiment, commands could be sent to a network element command line interface.

For communication, communication protocols such as telnet or sash, or commands using SNMP could be employed, in any suitable combination.

The method could further comprise the step of:
Sending the sequence of configuration commands needed to perform the action of add, modify or remove of said specific configuration command to said network element, step 204.

The method could further comprise the step of:
-mapping a device independent name to the sequence of configuration commands used to add, modify or remove a specific configuration command in a device, step 205.

It is possible to use any combination of names to create a service consisting of the underlying sequences of configuration commands to add, modify or remove the service.

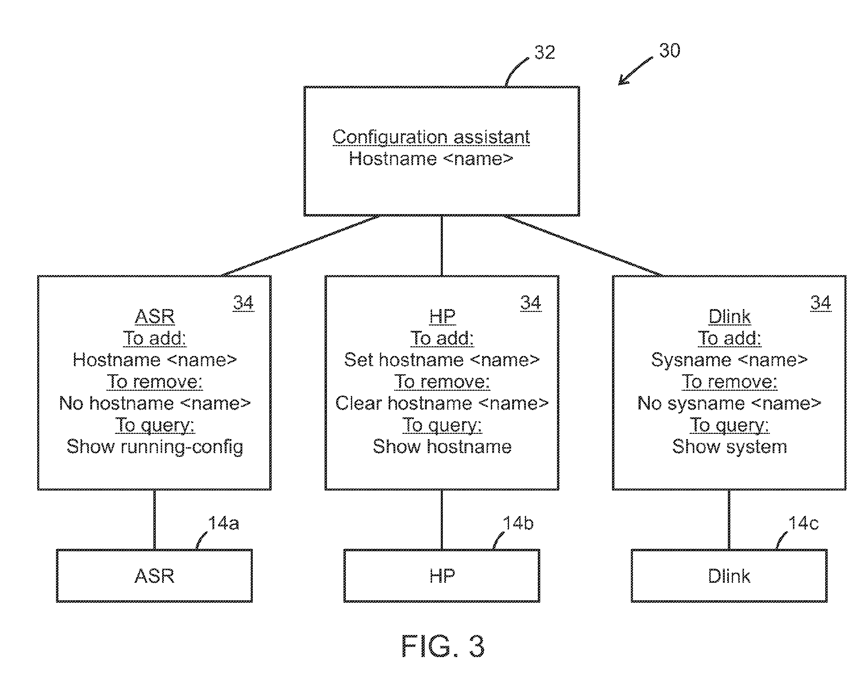

New is referred to figure 3, which shows the network element configuration device 30 according to an embodiment of the invention in more detail. The network element configuration device 30, according to an embodiment of the invention, shown in this figure 3 is provided for configuring a first, second and a third network element, respectively 14a, b, c in a network 10 (only the second network element 14b will be described in detail, but the invention is not limited to this particular network element 14b only). The network element 14b is adapted for providing services to subscribers (not shown) and supports a number of subscribers for provision of the services. The network element configuration device 30 is typically provided in and part of the network control and provisioning system 20 (not shown in this figure, but in figure 1 only), and arranged to control all services available for the network elements 14a, b, c, and is arranged to provide a user interface 32 for setting (including specifying) network element configuration information 34 for a specific network element 14a, b, c (this is typically provided by a network engineer), and configuring the network element 14a, b, c according to the configuration information set. A typical set of parameters for a particular network element is shown in figure 3. The parameter syntax, for adding, deleting and modifying (query) is shown in figure 3 for a respective particular network element 14a, b, and c. The network element specific syntax for a number of operations, for instance, to add, "set host name <name>" is shown, to delete, "clear hostname <name>" and to query "show hostname" are shown for this particular network element 14b. In case another network element was referred to instead such as the first network element 14a, herein ASR, the parameter for adding will be "hostname <name>" or if the third network element 14c was referred to such as Dlink, the following parameter: "sysname <name> will be shown instead, but having the same functionality. For a user of the inventive configuration device 30, no programming skills will be required to modify the control- and provisioning system 20 using new scripts or implementing other new software to support a new type of network element 14 or modify control of an existing type of network element 14.

The configuration device 30, in particular a graphical interface 32, is arranged to be able to determine the current setting of a configuration command by a query to the network element 14a, b, c. Typically, the query consists of obtaining the network elements 14a, b, c complete running or stored configuration file. The query consists of using at the least one of the network element command line interface diagnostic commands and capture from its output the current setting of the configuration command.

Typically, the network element configuration device 30 receives configuration from a CRE (not shown) and network elements 14a, b, c connect to the network element configuration device 30 to receive the configuration as described.

The network element configuration device 30 is typically used to create element managers for third party hardware. Each new element manager is typically called an Element Manager Instance (EMI) and is managed by the control system 20 in the same way as existing elements.

Typically, the configuration information contains commands being specific to a particular network element vendor or version.

The system can be scalable to different network sizes and architectures and poses little limitation to future additions to the contents or handling of configuration information.

The foregoing detailed description is intended to illustrate and provide easier understanding of the invention, and should not be construed as limitations. Alternative embodiments will become apparent to those skilled in the art without departing from the spirit and scope of the present invention.

## Claims

1. A method for configuring a network element, the network element providing services in a network, wherein said configuring comprises changing a first configuration of the network element into a second configuration by sending configuration information only, such as commands, needed to modify configuration, the method comprising:
- providing, in a network element control- and provisioning system, a network element independent configuration user interface for setting network element configuration information, (step 201), wherein network element specific configuration information to the network element in order to modify a configuration is specified, (step 202); and
- configuring the network element according to the configuration information, (step 203).

2. The method according to claim 1, wherein the configuration information contains commands being specific to a particular network element vendor or version.

3. The method according to claim 1 or 2, comprising:
- providing the user interface as a graphical interface.

4. The method according to any one of the claims 1-3, comprising:
- sending the sequence of configuration commands needed to perform the action of add, modify or remove of said specific configuration command to said network element, (step 204).

5. The method according to any one of the claims 1-4, comprising:
- sending commands to a network element command line interface.

6. The method according to any one of the claims 1-5, comprising:
- using communication protocols such as telnet or ssh.

7. The method according to any one of the claims 1-5, comprising:
- sending commands using SNMP.

8. The method according to any one of the claims 1-7, comprising:
- mapping a device independent name to the sequence of configuration commands used to add, modify or remove a specific configuration command in a device, step (205).

9. The method according to any one of the claims 1-7, comprising:
- using any combination of names to create a service thereby the service consisting of the underlying sequences of configuration commands to add, modify or remove configuration.

10. The method according to any one of the claims 1-7, comprising:
- grouping of named sequences of configuration commands according to network element type, vendor or version.

11. The method according to any one of the claims 1-7, comprising:
- configuring two or more network elements of different type, vendor or version.

12. The method according to any one of the claims 1-7, comprising:
- each such network element of different type, vendor or version using the same name of their respective named sequence of configuration commands.

13. The method according to any one of the claims 1-7, comprising:
- using the same list of named sequences of configuration command for a service on multiple network elements of different type, vendor or version.

14. A network element configuration device (30) for configuring a network element (14), the network element providing services in a network (10), the network comprising a network control- and provisioning system (20), the network element configuration device (30) being provided in the network control- and provisioning system (20), wherein said configuring comprises changing a first configuration of the network element into a second configuration by sending configuration information only, such as commands, needed to modify configuration; wherein the network element configuration device (30) is arranged to provide a network element independent user interface (32) for setting network element configuration information, wherein network element (14) specific configuration information to the network element (14) in order to modify a configuration can be specified and transmitted, and configuring the network element (14) according to the configuration information set.

15. A device as claimed in claim 14, wherein the user interface (32) comprises a graphical user interface.
